Europäisches Patentamt

(19) European Patent Office

Office européen des brevets

(11) Numéro de publication : **0 112 263**
**B1**

(12) **FASCICULE DE BREVET EUROPÉEN**

(45) Date de publication du fascicule du brevet :
16.06.87

(51) Int. Cl.⁴ : **A 47 J 37/12**

(21) Numéro de dépôt : **83420187.3**

(22) Date de dépôt : **09.12.83**

(54) **Friteuse à circulation d'huile.**

(30) Priorité : **10.12.82 FR 8220990**

(43) Date de publication de la demande :
**27.06.84 Bulletin 84/26**

(45) Mention de la délivrance du brevet :
**16.06.87 Bulletin 87/25**

(84) Etats contractants désignés :
**BE CH DE GB IT LI NL**

(56) Documents cités :
**FR-A- 1 023 166**
**FR-A- 2 406 419**
**GB-A- 1 436 579**
**US-A- 3 839 951**
**US-A- 4 324 173**

(73) Titulaire : **Patriarca, Jean**
**50 Cours Vitton**
**F-699006 Lyon (FR)**

(72) Inventeur : **Patriarca, Jean**
**50 Cours Vitton**
**F-699006 Lyon (FR)**

(74) Mandataire : **Monnier, Guy et al**
**Cabinet Monnier 150 Cours Lafayette B.P. 3058**
**F-69393 Lyon Cédex 03 (FR)**

Jouve, 18. rue St-Denis, 75001 Paris. France

## Description

On sait que dans leur construction classique les friteuses pour restaurants et collectivités comprennent une cuve qui est équipée de moyens de chauffe pour le bain de cuisson y contenu et qui est propre à recevoir un panier-égouttoir amovible pour la cuisson des aliments à frire. La partie inférieure de cette cuve est établie à des dimensions réduites de façon à déterminer au-dessous des moyens de chauffe une zone froide destinée à favoriser le dépôt des déchets de cuisson, ces déchets étant éliminés périodiquement par vidange.

L'expérience démontre surabondamment que le dépôt des déchets dans la partie inférieure de la cuve s'effectue de manière très erratique et qu'en fait ces déchets se maintiennent longtemps dans la partie supérieure, à l'intérieur de laquelle ils sont carbonisés, avant de s'immobiliser dans le fond. Il y a par ailleurs lieu de remarquer qu'en pratique la périodicité des vidanges est très lâche, ce qui ne contribue évidemment pas à améliorer la situation.

Le brevet FR-A-1 023 166 illustre bien cette construction classique, la cuve de cuisson de la friteuse étant en outre pourvue d'un trop-plein propre à éviter le débordement de l'huile.

Aussi a-t-on proposé, notamment dans le brevet US-A-3 839 951 des friteuses comprenant, en plus de la cuve de cuisson, du panier-égouttoir destiné à être placé dans celle-ci, des moyens de chauffe et du récipient de filtration, un bac dont l'espace intérieur communique avec celui de la cuve précitée au niveau de la paroi latérale de ladite cuve par une canalisation raccordée au refoulement d'une pompe qui aspire l'huile dans le bac à proximité des moyens de chauffe. Le récipient de filtration communique avec le bac par l'intermédiaire d'un conduit.

On évite ainsi toute carbonisation dangereuse des déchets de cuisson puisque ceux-ci ne peuvent pas atteindre le bain d'huile renfermé par le bac.

La présente invention a pour objet une forme de réalisation améliorée d'une friteuse du type visé au brevet FR-A-1 023 166, ayant les caractéristiques du préambule de la revendication 1, laquelle forme de réalisation est définie dans les revendications 1 à 4.

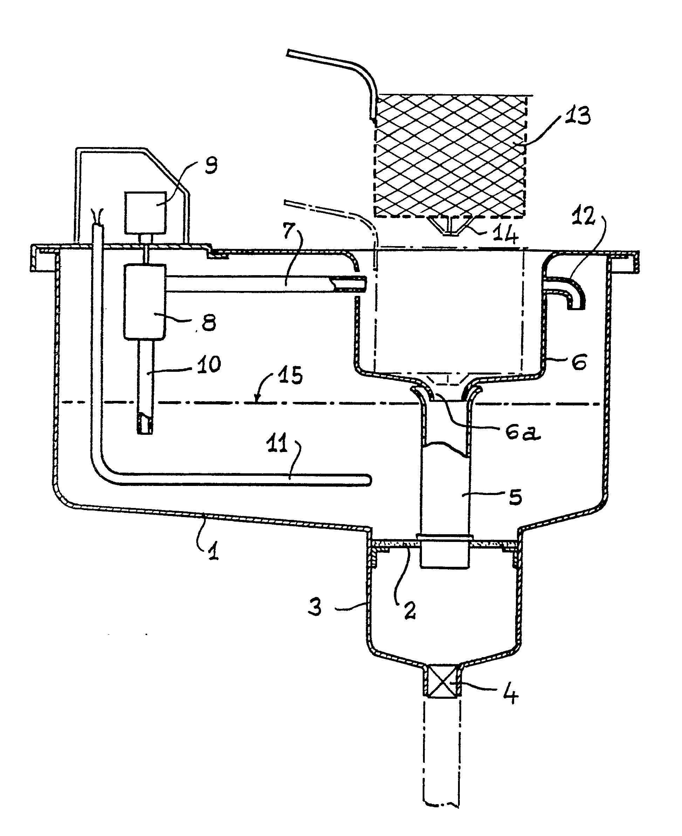

Le dessin annexé, donné à titre d'exemple, permettra de mieux comprendre l'invention :

La figure unique de ce dessin est une coupe verticale montrant très schématiquement l'agencement général d'une friteuse suivant l'invention.

Sur cette figure la référence 1 désigne un bac de relativement grande contenance dont le fond communique, à travers une paroi filtrante 2 prévue amovible, avec un récipient cylindrique 3 équipé d'une vanne inférieure de vidange 4. La paroi filtrante 2 est solidaire en son centre d'un conduit vertical 5 dans le sommet évasé duquel est engagé le fond percé d'une cuve de cuisson 6 qui peut présenter en section un profil circulaire ou polygonal. La cuve 6 elle-même prévue démontable, repose par son bord supérieur replié contre le bord supérieur du bac 1, comme représenté.

Dans la paroi latérale de la cuve 6 débouche l'extrémité d'une canalisation horizontale fixe 7 branchée sur le refoulement d'une pompe 8, avantageusement du type à engrenages, entraînée par un moteur 9. La tubulure d'aspiration de cette pompe 8 se raccorde à une canalisation verticale 10 qui s'ouvre au-dessus d'une résistance électrique 11 destinée au chauffage de l'huile contenue dans le bac 1. On observera par ailleurs qu'au niveau du débouché de la canalisation 7 dans la cuve 6 cette dernière est équipée d'un trop-plein 12 qui s'ouvre dans le bac 1.

A l'ensemble ainsi constitué est associé un panier-égouttoir 13 destiné à renfermer les aliments à frire. Ce panier 13 est conformé de façon à venir se disposer à l'intérieur de la cuve de cuisson 6 ; sa construction est classique en ce sens qu'il présente une paroi et un fond ajourés, mais on remarquera que ce fond est muni d'un bossage central 14 conformé de manière à venir s'engager à jeu réduit à l'intérieur de l'ouverture inférieure 6a ménagée dans le fond de la cuve 6 en vis-à-vis du débouché supérieur du conduit 5.

L'utilisation et le fonctionnement de la friteuse ci-dessus décrite découlent des explications qui précèdent et se comprennent aisément.

Le bac 1 étant supposé rempli d'huile de cuisson jusqu'au niveau indiqué en 15 (ce niveau correspondant substantiellement au débouché supérieur du conduit 5), l'opérateur commence par mettre sous tension la résistance de chauffe 11. Lorsque le bain d'huile a été ainsi porté à la température de cuisson, la pompe 8 est mise en fonctionnement en même temps que le panier 13 rempli d'aliments à frire est placé dans la cuve 6. L'huile chaude prélevée par la canalisation 10 immédiatement au-dessus de la résistance 11 est en conséquence refoulée par la canalisation 7 dans la cuve 6, de telle sorte qu'elle arrose le contenu du panier 13 en assurant la cuisson des aliments renfermés par celui-ci.

L'engagement du bossage inférieur 14 dans l'ouverture 6a n'est pas étanche et ménage donc un passage à l'huile. En conséquence l'huile ainsi évacuée se rassemble dans le récipient inférieur 3 et elle n'est admise à l'intérieur du bac 1 proprement dit qu'après traversée de la paroi filtrante 2 qui s'oppose ainsi à tout passage de déchets. Le récipient 3 constitue de la sorte une zone froide qui favorise la décantation des déchets de cuisson.

On notera cependant que la majorité des déchets de cuisson qui parviennent à traverser la paroi ajourée du panier 13 sont retenus par le bossage 14 engagé dans l'ouverture 6a. L'obturation plus ou moins prononcée qui s'ensuit ne peut donner lieu à aucune conséquence fâcheuse du fait que le trop-plein 12 assure l'évacuation de l'huile dans le bac 1 lorsque celle-ci atteint le débouché interne de la canalisation 7 (on peut doter ce trop-plein 12 d'un filtre afin d'éviter que les déchets en suspension dans la cuve 6 ne parviennent au bain d'huile renfermé par le bac 1). En tout état de cause lorsqu'en fin de cuisson le panier 13 est retiré de la cuve 6, le contenu de celle-ci s'écoule dans le récipient 3 avec les déchets retenus par le bossage 14 ; ces derniers se décantent dans la partie inférieure du récipient précité et ne peuvent en aucun cas parvenir à l'intérieur du bac 1 par suite de la paroi filtrante 2.

Bien évidemment cette paroi 2 doit être périodiquement retirée avec le conduit 5 pour être nettoyée afin d'éviter tout colmatage intempestif. De la même manière il est indispensable de vidanger périodiquement le récipient 3 pour évacuer à travers la vanne 4 les déchets qui s'y sont accumulés.

On conçoit que la construction de l'ensemble de la friture n'a été que très schématiquement décrite et représentée. Il va notamment de soi que le bac 1 est avantageusement muni d'un doublage isothermique en vue de limiter les déperditions de chaleur.

Le trait essentiel de l'invention réside dans la disposition de la cuve de cuisson 7 à l'intérieur du bac 1 qui, referme le bain d'huile associé aux moyens de chauffe 11, cette disposition particulière simplifiant dans une mesure considérable la circulation et le filtrage de l'huile et assurant la retenue efficace des déchets en dehors de la zone de chauffage (suppression de toute carbonisation). On observera en outre que la cuisson est effectuée dans la cuve 7 avec une huile parfaitement chaude puisque cette huile est prélevée dans le bas 1 au-dessus de la résistance de chauffe 11 et qu'elle est ramenée, à une température inférieure, dans le récipient 3 et dans la partie inférieure du bac précité.

On comprend par ailleurs que la résistance de chauffe 11 peut être remplacée par une rampe à gaz disposée de façon à assurer le chauffage du bain d'huile au-dessus du récipient 3 et de la paroi filtrante 2. On notera de plus que le même bac 1 peut renfermer plusieurs cuves de cuisson 6 alimentées par plusieurs pompes.

**Revendications**

1. Friteuse, du genre comprenant en combinaison une cuve de cuisson (6), un panier-égouttoir (13) destiné à être placé dans ladite cuve, des moyens de chauffe (11) et un récipient inférieur (3) formant zone froide pour favoriser la décantation des déchets de cuisson provenant du panier-égouttoir précité, caractérisée en ce que la cuve (6) est placée dans la partie supérieure d'un bac de plus grande contenance (1), dont l'espace intérieur communique avec celui de ladite cuve d'une part au niveau du fond percé de cette dernière par l'intermédiaire d'un conduit (5) qui aboutit dans le récipient inférieur de décantation (3) lui-même relié à l'espace intérieur du bac à travers une paroi filtrante (2), et d'autre part au niveau de la paroi latérale de ladite cuve par une canalisation (7) raccordée au refoulement d'au moins une pompe (8) qui aspire l'huile dans le bac au-dessus des moyens de chauffe (11).

2. Friteuse suivant la revendication 1, caractérisée en ce que le fond du panier-égouttoir (13) comporte un bossage (14) propre à venir s'engager dans l'ouverture (6a) du fond de la cuve (6) en vue de retenir les déchets de cuisson jusqu'au moment du retrait dudit panier hors de cette cuve (6).

3. Friteuse suivant l'une quelconque des revendications 1 et 2, caractérisée en ce que la paroi latérale de la cuve (6) est équipée d'un trop-plein (12) qui débouche dans le bac (1).

4. Friteuse suivant l'une quelconque des revendications 1 à 3, caractérisée en ce que la paroi filtrante (2) est amovible et est solidaire du conduit (5) dont le débouché supérieur évasé vient se disposer au-dessous de l'ouverture (6a) du fond de la cuve (6), elle-même prévue démontable par rapport au bac (1) et à la canalisation de refoulement (7).

**Claims**

1. Fryer of the type comprising a combination of a cooking vat (6), a drainage basket intended to be placed in the said vat, heating means (11) and a lower receiving vessel (3) forming a cold zone to assist the decantation of cooking wastes arising from the aforesaid dranage basket, characterised in that the vat (6) is located in the upper part of a tank (1) of greater capacity, of which the interior space communicates, on the one hand, with that of the said vat through the apertured base of the latter via a conduit (5) which terminates in the lower decantation receiving vessel (3), itself connected to the interior space of the tank via a filtering partition (2), and on the other hand through the lateral wall of the said vat by a channel (7) connected to the outflow of at least one pump (8) which drives the oil in the tank over the heating means (11).

2. Fryer according to claim 1, characterised in that the base of the drainage basket (13) comprises a protuberance (14) adapted for engagement in the opening (6a) of the base of the vat (6) in order to retain the cooking wastes up to the moment of withdrawal of the said basket out of that vat (6).

3. Fryer according to any of claims 1 and 2, characterised in that the lateral wall of the vat (6) is provided with an overflow (12) which opens into the tank (1).

4. Fryer according to any one of claims 1 to 3, characterised in that the filtering partition (2) is removable and is fast with the conduit (5) of which the upper funnel shaped mouth is arranged to be disposed below the opening (6a) at the base of the vat (6), itself provided demountable relative to the tank (1) and the delivery channel (7).

**Patentansprüche**

1. Friteuse mit einem Fritiergefäß (6), einem darin einzusetzenden Abtropfkorb (13), Heizmitteln (11) und einem unteren Behälter (3), der eine Kaltzone bildet und das Absetzen von aus dem Abtropfkorb kommenden Backrückständen begünstigt, dadurch gekennzeichnet, daß das Gefäß (6) im oberen Teil einer Wanne (1) mit größerem Inhalt untergebracht ist, deren Innenraum mit demjenigen des genannten Gefäßen kommuniziert, einerseits beim durchbohrten Boden des letzteren über eine Leitung (5), die in den unteren Absetzbehälter (3) mündet, der selbst mit dem Innenraum der Wanne mittels einer Filterwand (2) verbunden ist, und andererseits an der Seitenwand des genannten Gefäßes mittels einer Zuleitung (7), welche an die Druckseite mindestens einer Pumpe (8) angeschlossen ist, die das Öl über den Heizmitteln (11) aus der Wanne ansaugt.

2. Friteuse nach Anspruch 1, dadurch gekennzeichnet, daß der Boden des Abtropfkorbes (13) einen Vorsprung (14) aufweist, der in die Öffnung (6a) des Bodens des Gefäßes (6) hineinragt und die Backrückstände zurückhält, bis der Korb aus dem Gefäß (6) herausgenommen wird.

3. Friteuse nach einem der Ansprüche 1 oder 2, dadurch gekennzeichnet, daß die Seitenwand des Gefäßes (6) einen Überlauf (12) besitzt, der in die Wanne (1) mündet.

4. Friteuse nach einem der Ansprüche 1 bis 3, dadurch gekennzeichnet, daß die Filterwand (2) herausnehmbar und mit der Leitung (5) fest verbunden ist, deren obere erweiterte Öffnung sich unter der Öffnung (6a) des Bodens des Gefäßes (6) befindet, welch letzteres wiederum bezüglich der Wanne (1) und der Förderleitung (7) abmontierbar vorgesehen ist.

0 112 263